(19) Europäisches Patentamt
European Patent Office
Office européen des brevets

(11) **EP 4 765 306 A1**

(12) **EUROPEAN PATENT APPLICATION**
published in accordance with Art. 153(4) EPC

(43) Date of publication:
**24.06.2026 Bulletin 2026/26**

(21) Application number: **24901107.3**

(22) Date of filing: **05.12.2024**

(51) International Patent Classification (IPC):
$H01M\ 10/42^{(2006.01)}$    $H01M\ 10/44^{(2006.01)}$
$H01M\ 10/0565^{(2010.01)}$    $H01M\ 10/04^{(2006.01)}$
$H01M\ 10/052^{(2010.01)}$

(52) Cooperative Patent Classification (CPC):
**H01M 10/04; H01M 10/052; H01M 10/0565;
H01M 10/42; H01M 10/44;** Y02E 60/10; Y02P 70/50

(86) International application number:
**PCT/KR2024/019886**

(87) International publication number:
**WO 2025/121921 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 06.12.2023 KR 20230176098
27.11.2024 KR 20240172904

(71) Applicant: **LG Energy Solution, Ltd.
Seoul 07335 (KR)**

(72) Inventors:
- **KANG, Gyung Soo
  Daejeon 34122 (KR)**
- **JEONG, Yeon Beom
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SECONDARY BATTERY AND METHOD FOR MANUFACTURING SAME**

(57) The present invention relates to a secondary battery including an electrode assembly in which a positive electrode plate, a negative electrode plate, and a separator disposed between the positive electrode plate and the negative electrode plate are wound in one direction and impregnated with an electrolyte; a hollow center pin disposed on a winding axis of the electrode assembly and having a plurality of holes formed on an outer circumferential surface thereof; an electrolyte solid disposed inside a hollow of the center pin and including a first polymer electrolyte having a melting point of 60°C to 73°C; a battery case accommodating the electrode assembly and the center pin; and a sealing body sealing an open end of the battery case. A secondary battery with improved electrolyte impregnability may be achieved by using the electrolyte solid in the secondary battery.

[FIG. 3a]

EP 4 765 306 A1

**Description**

**TECHNICAL FIELD**

Cross-reference to Related Applications

This application claims priority from Korean Patent Application Nos. 10-2023-0176098, filed on December 6, 2023, and 10-2024-0172904, filed on November 27, 2024, the disclosures of which are incorporated by reference herein.

Technical Field

The present invention relates to a secondary battery, and more particularly, to a secondary battery having improved output stability and impregnability.

**BACKGROUND ART**

Demand for secondary batteries as an energy source has been significantly increased with technological advances in electric vehicles and portable devices. Particularly, demand for secondary batteries with excellent capacity and output stability is increasing as a scope of application of the secondary batteries expands to electric vehicles (EVs) and hybrid electric vehicles (HEVs).

Particularly, in order to achieve a high-capacity secondary battery, a secondary battery is being prepared in a larger size. If the capacity and size of the secondary battery increase, more electrolyte needs to be injected into the secondary battery. In this case, it is important that a large-sized electrode assembly is sufficiently impregnated with the electrolyte. In a case in which the electrode assembly of the secondary battery is not sufficiently impregnated with the electrolyte, the capacity of the secondary battery may be reduced and degradation of an electrode may be accelerated to cause a problem of shortening lifetime of the secondary battery.

Also, the above-described problem may occur when an amount of the electrolyte is insufficient. For example, the amount of the electrolyte is determined by an initial injection amount of the electrolyte, wherein the amount of the electrolyte is reduced by repeated charging and discharging during use of the secondary battery, and, as a result, there is a concern that electrolyte loss may occur.

Thus, there is a need for a technique which may compensate for the amount of the electrolyte and electrolyte impregnability of the secondary battery.

**DISCLOSURE OF THE INVENTION**

**TECHNICAL PROBLEM**

An aspect of the present invention is to provide a secondary battery in which electrolyte impregnability and output stability are improved by disposing a polymer electrolyte, which may melt above a certain temperature, inside a center pin having a plurality of holes.

Another aspect of the present invention is to provide a method of preparing the secondary battery in which the electrolyte impregnability and the output stability are improved by disposing the polymer electrolyte, which may melt above a certain temperature, inside the center pin having the plurality of holes.

**TECHNICAL SOLUTION**

[1] The present invention provides a secondary battery including: an electrode assembly in which a positive electrode plate, a negative electrode plate, and a separator disposed between the positive electrode plate and the negative electrode plate are wound in one direction and impregnated with an electrolyte; a hollow center pin disposed on a winding axis of the electrode assembly and having a plurality of holes formed on an outer circumferential surface thereof; an electrolyte solid disposed inside a hollow of the center pin and including a first polymer electrolyte having a melting point of 60°C to 73°C; a battery case accommodating the electrode assembly and the center pin; and a sealing body sealing an open end of the battery case.

[2] The present invention provides the secondary battery of [1] above, wherein the first polymer electrolyte includes a main component including polyethylene oxide (PEO); and a minor component including at least one selected from the group consisting of lithium bis(trifluoromethanesulfonyl)imide (LiTFSI) and aluminum oxide ($Al_2O_3$).

[3] The present invention provides the secondary battery of [1] or [2] above, wherein a diameter ($D_c$) of the center pin and a diameter ($D_h$) of each of the plurality of holes satisfy Equation 1:

$$[Equation\ 1]$$

$$D_c/10\ \leq\ D_h\ \leq\ D_c/3.$$

[4] The present invention provides the secondary battery of at least one of [1] to [3] above, wherein the plurality of holes are arranged at predetermined intervals along a circumferential direction.

[5] The present invention provides the secondary battery of at least one of [1] to [4] above, wherein the plurality of holes are arranged at predetermined intervals along a direction perpendicular to the circumferential direction.

[6] The present invention provides the secondary battery of at least one of [1] to [5] above, wherein the electrolyte solid further includes a second polymer electrolyte, wherein a melting point of the second polymer electrolyte is lower than the melting point of the first polymer electrolyte.

[7] The present invention provides the secondary battery of [6] above, wherein the melting point of the second polymer electrolyte is in a range of 35°C to 55°C.

[8] The present invention provides the secondary battery of [6] above, wherein the second polymer electrolyte includes a main component including succinonitrile (SN); and a minor component including at least one selected from the group consisting of polycarboxylate ether (PCE), polyethylene oxide (PEO), polyvinylpyrrolidone (PVP), polyethylene carbonate (PEC), and polyacrylonitrile (PAN).

[9] The present invention provides the secondary battery of at least one of [1] to [8] above, wherein the secondary battery further includes a first electrolyte sheet including the first polymer electrolyte, wherein the first electrolyte sheet is disposed on at least one surface selected from a surface of the separator and an outermost surface of the electrode assembly.

[10] The present invention provides the secondary battery of [9] above, wherein the secondary battery further includes a second electrolyte sheet including the second polymer electrolyte, wherein the second electrolyte sheet is disposed on at least one surface selected from the surface of the separator and the outermost surface of the electrode assembly, and a melting point of the second polymer electrolyte is lower than the melting point of the first polymer electrolyte.

[11] The present invention provides the secondary battery of at least one of [1] to [10] above, wherein the secondary battery is a cylindrical type secondary battery.

[12] The present invention provides a method of preparing a secondary battery which includes the steps of: preparing an electrode assembly by winding a positive electrode plate, a negative electrode plate, and a separator disposed between the positive electrode plate and the negative electrode plate in one direction; accommodating the electrode assembly in a battery case; adding an electrolyte solid including a first polymer electrolyte inside a hollow center pin disposed on a winding axis of the electrode assembly; and preparing a non-formed secondary battery by adding an electrolyte to the battery case and sealing the battery case with a sealing body, wherein a melting point of the first polymer electrolyte is in a range of 60°C to 73°C.

[13] The present invention provides the method of [12] above, wherein the electrolyte solid further includes a second polymer electrolyte, wherein a melting point of the second polymer electrolyte is in a range of 35°C to 55°C.

[14] The present invention provides the method of [13] above, wherein the method further includes a step of performing formation on the non-formed secondary battery, wherein the center pin includes a plurality of holes, and the second polymer electrolyte melts and moves into pores of the electrode assembly through the plurality of holes during the performing of the formation on the non-formed secondary battery.

[15] The present invention provides the method of [13] above, wherein the preparing of the electrode assembly includes at least one selected from the steps of: preparing a first electrolyte sheet including the first polymer electrolyte, and disposing the first electrolyte sheet on at least one surface selected from a surface of the separator and an outermost surface of the electrode assembly; and preparing a second electrolyte sheet including the second polymer electrolyte, and disposing the second electrolyte sheet on at least one surface selected from the surface of the separator and the outermost surface of the electrode assembly.

## ADVANTAGEOUS EFFECTS

The present invention aims to provide a secondary battery in which an electrolyte, which is reduced during charge and discharge processes of a secondary battery, is replenished and electrolyte impregnability is improved by disposing a polymer electrolyte, which may melt above a certain temperature, inside a center pin. Also, the present invention aims to provide a secondary battery having excellent electrolyte impregnability and output stability despite its large size by disposing each of a first electrolyte sheet and a second electrolyte sheet, which have different melting points, in an electrode assembly.

Effects achievable from example embodiments of the present invention are not limited to the above described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

**BRIEF DESCRIPTION OF THE DRAWINGS**

FIG. 1 is a perspective view illustrating a secondary battery according to an embodiment.
FIG. 2 is a drawing for explaining the secondary battery according to the embodiment.
FIG. 3a is a projection view illustrating a center pin according to an embodiment.
FIG. 3b is a projection view illustrating a center pin according to an embodiment.
FIG. 3c is a projection view illustrating a center pin according to an embodiment.
FIG. 4 is a drawing illustrating a first electrolyte sheet disposed on a surface of a separator according to an embodiment.
FIG. 5 is a drawing illustrating the first electrolyte sheet and a second electrolyte sheet which are disposed on an electrode assembly according to an embodiment.

**MODE FOR CARRYING OUT THE INVENTION**

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

An "electrolyte solid" and an "electrolyte sheet" in this specification include materials capable of functioning as an electrolyte of a secondary battery with their components, for example, a polymer electrolyte, wherein they mean those having a sheet-like shape by maintaining a solid state at room temperature.

A "polymer electrolyte" in this specification may mean a material which may be formed into a shape, such as a sheet or band, by maintaining a solid state at room temperature and changes into an amorphous state by phase-transitioning into a liquid or gel at a melting temperature (Tm) or higher, and the polymer electrolyte may also be referred to as a solid polymer electrolyte (SPE) or a solid electrolyte.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases.

Such terms as "1st" and "2nd," or "first" and "second" may be used to simply distinguish a corresponding component from another, and does not limit the components in other aspect (e.g.: importance or order).

Hereinafter, the present invention will be described in detail.

A secondary battery according to the present invention includes at least one of configurations disclosed below, and may include any combination between technically possible configurations among the configurations below.

The secondary battery according to the present invention includes: an electrode assembly in which a positive electrode plate, a negative electrode plate, and a separator disposed between the positive electrode plate and the negative electrode plate are wound in one direction and impregnated with an electrolyte; a hollow center pin disposed on a winding axis of the electrode assembly and having a plurality of holes formed on an outer circumferential surface thereof; an electrolyte solid disposed inside a hollow of the center pin and including a first polymer electrolyte having a melting point of 60°C to 73°C; a battery case accommodating the electrode assembly and the center pin; and a sealing body sealing an open end of the battery case.

The secondary battery according to the present invention may replenish an amount of the electrolyte of the secondary battery by using an electrolyte solid including the first polymer electrolyte capable of melting within a normal operating temperature range of the secondary battery inside the hollow center pin, and may thus improve output stability.

Also, the electrolyte solid may further include a second polymer electrolyte, and a melting point of the second polymer electrolyte may be in a range of 35°C to 55°C which is lower than the melting point of the first polymer electrolyte. A secondary battery having excellent electrolyte impregnability may be achieved by using the second polymer electrolyte capable of melting during a formation process in the electrolyte solid.

That is, impregnability of a center of the electrode assembly may be improved through the electrolyte solid that is positioned inside the center pin, and accordingly, a secondary battery having excellent electrolyte impregnability as well as high capacity may be achieved.

Each of a first electrolyte sheet including the first polymer electrolyte and a second electrolyte sheet including the second polymer electrolyte may be disposed on at least one surface selected from a surface of the separator and an outermost surface of the electrode assembly. For example, the first electrolyte sheet may be disposed on the surface of the separator, and the second electrolyte sheet may be disposed on the outermost surface of the electrode assembly. Accordingly, the first electrolyte sheet disposed on the separator of the electrode assembly may improve electrolyte impregnability of the electrode assembly and may improve output stability by replenishing the amount of the electrolyte. Also, the second electrolyte sheet disposed on the outermost surface of the electrode assembly may improve the electrolyte impregnability of the electrode assembly.

Thus, in a case in which the electrolyte solid and the electrolyte sheet are utilized as a means for impregnating or replenishing the electrolyte during the formation process or charge and discharge of the secondary battery, since the means for impregnating or replenishing the electrolyte are present both inside and outside the electrode assembly, overall uniform impregnation and supply of the electrolyte may be performed, and thus, stable performance may be expected.

### <Secondary Battery>

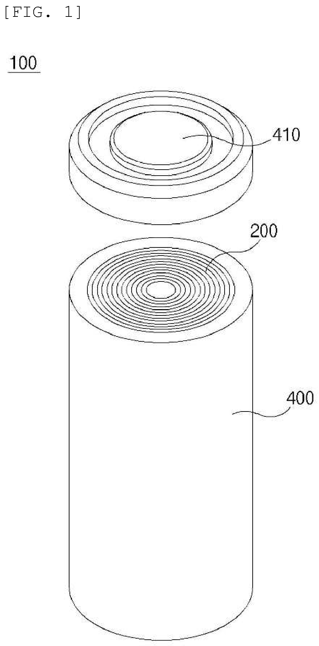

FIG. 1 is a perspective view illustrating a secondary battery 100 according to an embodiment.

Referring to FIG. 1, the secondary battery 100 includes an electrode assembly 200, a battery case 400, and a sealing body 410. A shape of the secondary battery 100 is not particularly limited, but a cylindrical type using a can or a prismatic type may be used. For example, the secondary battery 100 may be a cylindrical type secondary battery, and the battery case 400 may be a cylindrical can. In this case, the electrode assembly 200 may be a winding type, wherein it may be a jelly-roll-type electrode assembly.

The battery case 400 may be a container formed of a metallic material, and, for example, may include aluminum or an aluminum alloy. An open upper portion of the battery case 400 may be covered with a sealing body 410. The sealing body 410 is for sealing an open end of the battery case 400, wherein it may be coupled to the open end of the battery case 400.

According to another embodiment of the present invention, a battery module including the secondary battery 100 as a unit cell and a battery pack including the battery module may be provided. Since the battery module and the battery pack include the secondary battery having high capacity, high rate capability and cycle characteristics, the battery module and the battery pack may be used as a power source for a medium- and large-sized device selected from the group consisting of an electric vehicle, a hybrid electric vehicle, a plug-in hybrid electric vehicle, and a power storage system.

### Electrode Assembly

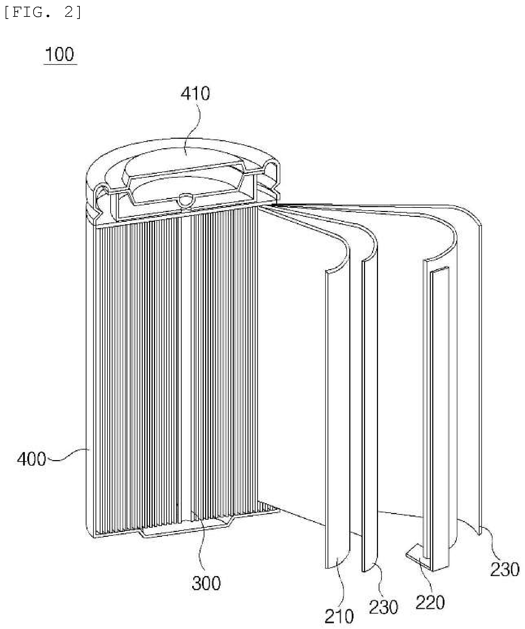

FIG. 2 is a drawing for explaining the secondary battery 100 according to the embodiment.

Referring to FIG. 2, the secondary battery 100 according to the present invention includes the electrode assembly 200 in which a positive electrode plate 210, a negative electrode plate 220, and a separator 230 disposed between the positive electrode plate 210 and the negative electrode plate 220 are wound in one direction. The electrode assembly 200 may be formed in a jelly-roll shape in which the positive electrode plate 210, the negative electrode plate 220, and the separator 230 are wound. The electrode assembly 200 includes a winding axis in a center, and the winding center is an empty space, wherein a center pin 300 may be disposed therein. In addition, the electrode assembly 200 may be impregnated with an electrolyte (not shown) that is injected into the battery case 400.

### (1) Positive Electrode Plate

The positive electrode plate 210 according to the present invention may include a positive electrode collector and a positive electrode active material layer (not shown) applied onto the positive electrode collector. The positive electrode plate 210 may have a structure in which the positive electrode active material layer is formed on the positive electrode collector. The positive electrode collector is not particularly limited as long as it has conductivity without causing chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material layer includes a positive electrode active material, a positive electrode conductive agent, and a positive electrode binder. The positive electrode active material may be a commonly used positive electrode active material. Specifically, the positive electrode active material may include a layered compound, such as

lithium cobalt oxide ($LiCoO_2$) or lithium nickel oxide ($LiNiO_2$), or a compound substituted with one or more transition metals; lithium iron oxides such as $LiFe_3O_4$; lithium manganese oxides such as $Li_{1+a1}Mn_{2-a1}O_4$ ($0 \leq a1 \leq 0.33$), $LiMnO_3$, $LiMn_2O_3$, and $LiMnO_2$; lithium copper oxide ($Li_2CuO_2$); vanadium oxides such as $LiV_3O_8$, $V_2O_5$, and $Cu_2V_2O_7$; nickel (Ni)-site type lithium nickel oxide expressed by a chemical formula of $LiNi_{1-a2}M_{c2}O_2$ (where M is at least one selected from the group consisting of cobalt (Co), manganese (Mn), aluminum (Al), copper (Cu), iron (Fe), magnesium (Mg), boron (B), and gallium (Ga), and a2 satisfies $0.01 \leq a2 \leq 0.3$); lithium manganese composite oxide expressed by a chemical formula of $LiMn_{2-a3}M_{c3}O_2$ (where M is at least one selected from the group consisting of Co, nickel (Ni), Fe, chromium (Cr), zinc (Zn), and tantalum (Ta), and a3 satisfies $0.01 \leq a3 \leq 0.1$) or $Li_2Mn_3MO_8$ (where M is at least one selected from the group consisting of Fe, Co, Ni, Cu, and Zn); and $LiMn_2O_4$ having a part of lithium (Li) being substituted with alkaline earth metal ions, but the positive electrode active material is not limited thereto. The positive electrode may be Li-metal.

The positive electrode conductive agent is used to provide conductivity to the electrode, wherein any conductive agent may be used without particular limitation as long as it has electron conductivity without causing chemical changes in the battery. Specific examples of the positive electrode conductive agent may be graphite such as natural graphite or artificial graphite; a carbon-based material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

Next, the positive electrode binder improves adhesion between positive electrode active material particles and adhesion between the positive electrode active material and the positive electrode collector. Specific examples of the positive electrode binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluorine rubber, or various copolymers thereof, and any one thereof or a mixture of two or more thereof may be used.

The positive electrode plate 210 may be prepared according to a typical method of preparing an electrode. For example, a positive electrode slurry is prepared by mixing the positive electrode active material, the positive electrode binder, and/or the positive electrode conductive agent in a positive electrode slurry solvent, and the positive electrode slurry is applied onto the positive electrode collector, then dried and rolled to prepare the positive electrode collector on which a positive electrode active material layer 222 is formed.

A solvent normally used in the art may be used as the solvent of the positive electrode slurry, and, for example, dimethyl sulfoxide (DMSO), isopropyl alcohol, N-methylpyrrolidone (NMP), acetone, or water may be used alone or in a mixture of two or more.

## (2) Negative Electrode Plate

The negative electrode plate 220 according to the present invention may have a structure in which a negative electrode active material layer (not shown) is formed on a negative electrode collector (not shown). The negative electrode collector is not particularly limited as long as it has high conductivity without causing chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used.

As the negative electrode active material, compounds capable of reversibly intercalating and deintercalating lithium, which are generally used in the art, may be used, but types thereof are not particularly limited. Specific examples of the negative electrode active material may be a carbonaceous material such as artificial graphite, natural graphite, graphitized carbon fibers, and amorphous carbon; a silicon-based material such as silicon (Si), a Si-Me alloy (where Me is at least one selected from the group consisting of Al, tin (Sn), Mg, Cu, Fe, lead (Pb), Zn, Mn, Cr, titanium (Ti), and Ni), $SiO_y$ (where $0 < y < 2$), and a Si-C composite; a lithium metal thin film; a metallic material alloyable with lithium such as Sn and Al, and any one thereof or a mixture of two or more thereof may be used.

The negative electrode conductive agent is used to provide conductivity to the negative electrode, wherein any conductive agent may be used without particular limitation as long as it has suitable electron conductivity without causing chemical changes in the battery. The negative electrode conductive agent may be the same as the positive electrode conductive agent.

The negative electrode binder improves adhesion between negative electrode active material particles and adhesion between the negative electrode active material and the negative electrode collector. The negative electrode binder may be the same as the positive electrode binder.

The negative electrode plate 220 may be prepared according to a typical method of preparing an electrode. For example, a negative electrode slurry is prepared by mixing the negative electrode active material, the negative electrode binder, and/or the negative electrode conductive agent in a negative electrode slurry solvent, and the negative electrode slurry is applied onto the negative electrode collector, then dried and rolled to prepare the negative electrode collector on which a negative electrode active material layer 212 is formed.

A solvent normally used in the art may be used as the solvent of the negative electrode slurry, and, for example, dimethyl sulfoxide (DMSO), isopropyl alcohol, N-methylpyrrolidone (NMP), acetone, or water may be used alone or in a mixture of two or more.

**(3) Separator**

The separator 230 according to the present invention is disposed between the electrodes, wherein it may provide a movement path of lithium ions. Any separator may be used as the separator without particular limitation as long as it is typically used in a secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

**Center Pin**

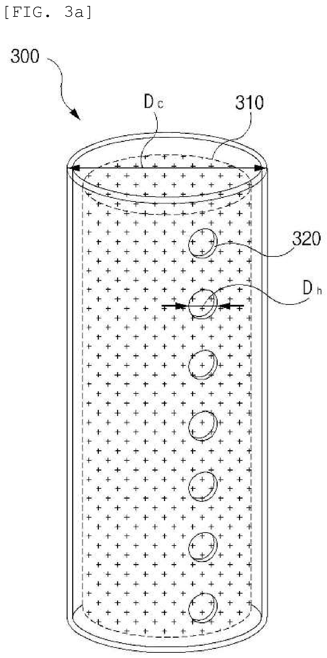

FIGS. 3a to 3c are drawings illustrating a center pin according to an embodiment.

Referring to FIGS. 2 and 3a to 3c, the hollow center pin 300 is disposed on the winding axis of the electrode assembly 200. The center pin 300 is disposed at the center of the electrode assembly 200, wherein it may be formed in a hollow cylindrical shape. The center pin 300 may be inserted into the winding axis of the electrode assembly 200 to prevent deformation of the electrode assembly 200.

In addition, a plurality of holes 320 may be disposed on the outer circumferential surface of the center pin 300, and an electrolyte solid 310 may be disposed inside the hollow. When the electrolyte solid 310 melts above a certain temperature and undergoes a phase transition to an amorphous state such as a liquid or gel, the plurality of holes 320 may act as a passage through which the electrolyte solid 310 moves from the inside of the center pin 300 toward the electrode assembly 200.

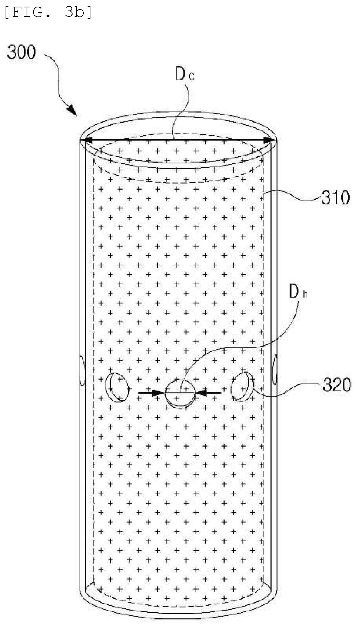

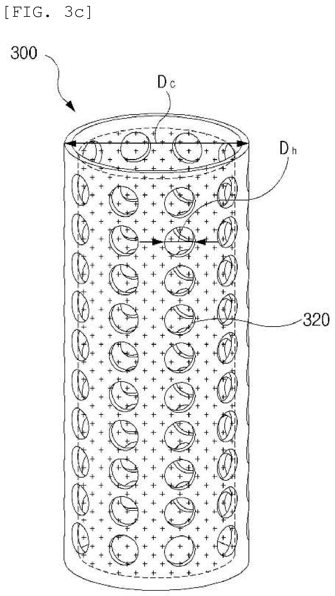

Specifically, referring to FIG. 3A, the plurality of holes 320 may be arranged at predetermined intervals along a circumferential direction, and referring to FIG. 3B, the plurality of holes 320 may be arranged at predetermined intervals along a direction perpendicular to the circumferential direction. Referring to FIG. 3C, the plurality of holes 320 may be arranged on the outer circumferential surface of the center pin 300 along the circumferential direction and the direction perpendicular to the circumferential direction. The plurality of holes 320 may be arranged in an appropriate number on the center pin 300 as needed, and, since direction and speed of movement of the electrolyte may be controlled by arrangement position and the number of the plurality of holes 320, the arrangement position and the number of the plurality of holes 320 may be adjusted according to a type of the electrolyte solid 320.

Also, a diameter ($D_c$) of the center pin and a diameter ($D_h$) of each of the plurality of holes 320 may satisfy Equation 1 below.

$$[\text{Equation } 1]$$

$$D_c/10 \leq D_h \leq D_c/3$$

When the diameter ($D_h$) of each of the plurality of holes 320 is 1/10 or more of the diameter ($D_c$) of the center pin, it may be easy for the electrolyte solid 310 disposed inside the center pin 300 to move to the electrode assembly 200. Also, when the diameter ($D_h$) of each of the plurality of holes 320 is 1/3 or less of the diameter ($D_c$) of the center pin, the center pin 300 may be designed such that the movement speed of the electrolyte solid 310 is not excessively fast while having excellent durability. A secondary battery capable of maintaining the electrolyte impregnability and output stability may be achieved by the center pin 300 with the plurality of holes 320 satisfying the above range. Thus, preferably, the diameter ($D_h$) of each of the plurality of holes 320 may be 1/10 or more, 1/9 or more, 1/8 or more, or 1/7 or more of the diameter ($D_c$) of the center pin, and preferably, the diameter ($D_h$) of each of the plurality of holes 320 may be 1/3 or less, 1/4 or less, 1/5 or less, or 1/6 or less of the diameter ($D_c$) of the center pin.

**Electrolyte Solid**

The electrolyte solid 310 according to the present invention is disposed inside the hollow of the center pin 300. A shape of the electrolyte solid 310 is not particularly limited as long as it may be disposed inside the center pin 300. For example, the shape of the electrolyte solid 310 may be cylindrical, prismatic, or irregular. Also, the electrolyte solid 310 may include one or more lumps, for example, two lumps having different compositions.

Furthermore, the electrolyte solid 310 includes a first polymer electrolyte having a melting point of 60°C to 73°C. The first polymer electrolyte may include polyethylene oxide (PEO), and may preferably include a main component including polyethylene oxide (PEO); and a minor component including at least one selected from the group consisting of lithium bis(trifluoromethanesulfonyl)imide (LiTFSI) and aluminum oxide ($Al_2O_3$). If polyethylene oxide (PEO) having a melting point of about 75°C is used alone as the first polymer electrolyte, it may not melt at a normal operating temperature of the secondary battery. Thus, the electrolyte solid 310 including the first polymer electrolyte may melt during operation of the secondary battery by mixing the lithium bis(trifluoromethanesulfonyl)imide (LiTFSI) or aluminum oxide ($Al_2O_3$) with the polyethylene oxide (PEO). As a result, the electrolyte may be replenished into the electrode assembly 200, the electrolyte impregnability may be improved, and the secondary battery 100 with excellent performance may be achieved.

Specifically, the first polymer electrolyte may include the polyethylene oxide (PEO) and the lithium bis(trifluoromethanesulfonyl)imide (LiTFSI) in a weight ratio of 40:1 to 80:1, preferably, in a weight ratio of 40:1 to 60:1. The lithium bis(trifluoromethanesulfonyl)imide (LiTFSI) may change a structure of the polyethylene oxide (PEO) from crystalline to amorphous, and, as a result, may decrease the melting point of the first polymer electrolyte. When the weight ratio of the polyethylene oxide (PEO) to the lithium bis(trifluoromethanesulfonyl)imide (LiTFSI) satisfies the above range, the first electrolyte sheet may melt during the operation of the secondary battery 100 without melting during a preparation process of the secondary battery 100.

Also, the melting point of the first polymer electrolyte may be in a range of 60°C to 73°C, preferably 60°C to 70°C, and more preferably 60°C to 66°C. If the melting point of the first polymer electrolyte is lower than 60°C, since the first polymer electrolyte completely melts during the preparation process of the secondary battery 100, it does not exist inside the center pin 300 after the secondary battery 100 is completed, and thus, the electrolyte may not be replenished after the preparation of the secondary battery 100 is completed. In contrast, if the melting point of the first polymer electrolyte is higher than 73°C, since a first electrolyte sheet 230_1 does not melt within the normal operating temperature range of the secondary battery 100, it may not play a role in replenishing the electrolyte. Thus, preferably, the melting point of the first polymer electrolyte may be 60°C or higher, 61°C or higher, or 62°C or higher, and the melting point of the first polymer electrolyte may be 73°C or less, 71°C or less, 70°C or less, 68°C or less, or 66°C or less.

The first polymer electrolyte may partially melt during the formation process of the secondary battery, and the remainder may melt during the operation of the secondary battery. That is, the first polymer electrolyte included in the electrolyte solid may be disposed in the hollow of the center pin 300 when the preparation of the secondary battery is completed.

In addition, the electrolyte solid 310 may further include a second polymer electrolyte. The second polymer electrolyte may include a main component including succinonitrile (SN); and a minor component including at least one selected from the group consisting of polycarboxylate ether (PCE), polyethylene oxide (PEO), polyvinylpyrrolidone (PVP), polyethylene carbonate (PEC), and polyacrylonitrile (PAN). In exemplary embodiments, the second polymer electrolyte may include a combination of polycarboxylate ether (PCE) and polyethylene oxide (PEO), a combination of polycarboxylate ether (PCE) and polyvinylpyrrolidone (PVP), a combination of polycarboxylate ether (PCE) and polyethylene carbonate (PEC), or a combination of polycarboxylate ether (PCE) and polyacrylonitrile (PAN), as the minor component.

In exemplary embodiments, a molecular weight of the polycarboxylate ether (PCE) may be about 165 g/mol, a molecular weight of the polyethylene oxide (PEO) may be about 100 g/mol, and a molecular weight of the polyvinylpyrrolidine (PVP) may be about 25 g/mol.

A melting point of the second polymer electrolyte may be lower than the melting point of the first polymer electrolyte. Specifically, the melting point of the second polymer electrolyte may be in a range of about 35°C to 55°C, preferably about 35°C to 53°C, and more preferably about 40°C to 50°C. The second polymer electrolyte may melt during the preparation process of the secondary battery 100, and, after the second polymer electrolyte melts during the process, it may be impregnated into the positive electrode plate 210, the negative electrode plate 220, and the separator 230 in the electrode assembly 200 and may not return to its original state even if the temperature is decreased again, and, as a result, it may improve electrolyte impregnability of the secondary battery 100 during the preparation process. Thus, preferably, the melting point of the second polymer electrolyte may be 35°C or higher, 37°C or higher, 40°C or higher, or 42°C or higher, and the melting point of the second polymer electrolyte may be 55°C or less, 53°C or less, 52°C or less, 50°C or less, or 48°C or less.

That is, the second polymer electrolyte included in the electrolyte solid may melt during the formation process of the secondary battery 100, and, as a result, the secondary battery 100 with improved electrolyte impregnability may be achieved.

In conclusion, the electrolyte solid 310 may include at least one selected from the group consisting of the first polymer electrolyte and the second polymer electrolyte. The electrolyte impregnability of the secondary battery 100 may be improved during the preparation process of the secondary battery and during the operation of the prepared secondary battery by using the first polymer electrolyte and the second polymer electrolyte, which have different melting points, in the electrolyte solid 310. Particularly, as the electrolyte solid disposed inside the center pin 300 melts and moves to the center of the electrode assembly 200, the electrolyte solid may impregnate the electrode assembly 200 up to the center of the large-sized electrode assembly 200. Accordingly, the electrolyte impregnability of the large-sized secondary battery may be improved without an additional process.

In addition, the electrolyte solid 310, in which the first polymer electrolyte is used, may improve the output stability by replenishing the electrolyte that is reduced during the operation of the prepared secondary battery.

**Electrolyte Sheet**

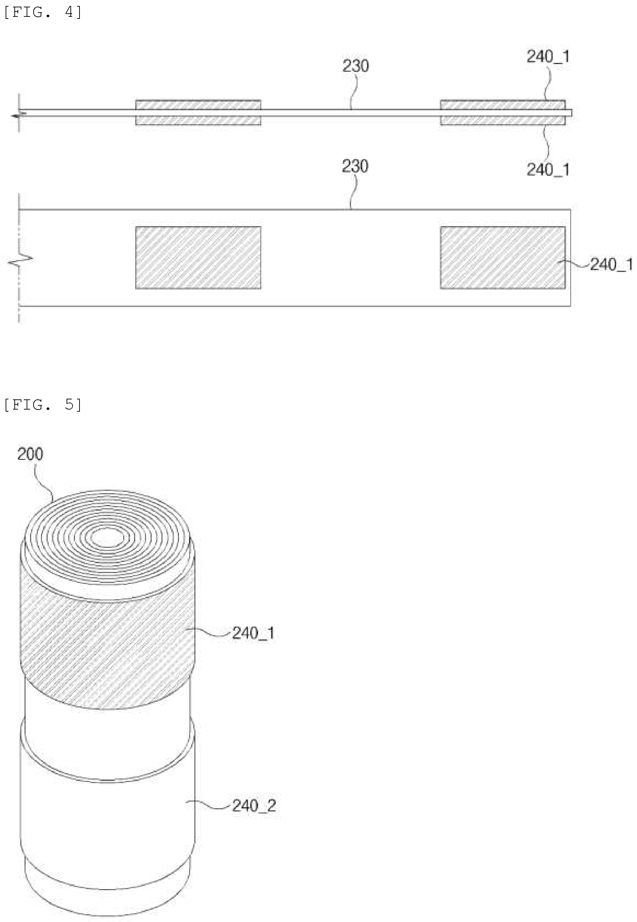

FIG. 4 is a drawing illustrating the first electrolyte sheet disposed on the separator according to an embodiment.

FIG. 5 is a drawing illustrating the first electrolyte sheet and the second electrolyte sheet which are disposed on the electrode assembly according to an embodiment.

The first electrolyte sheet 240_1 includes a first polymer electrolyte, and, since the first polymer electrolyte is the same as described above, a detailed description thereof is omitted. A second electrolyte sheet 240_2 includes a second polymer electrolyte, and, since the second polymer electrolyte is the same as described above, a detailed description thereof is omitted.

Referring to FIGS. 4 and 5, each of the first electrolyte sheet 240_1 and the second electrolyte sheet 240_2 may be disposed on at least one surface selected from the surface of the separator 230 and the outermost surface of the electrode assembly 200. Specifically, the first electrolyte sheet 240_1 and the second electrolyte sheet 240_2 may be alternatingly disposed on the surface of the separator 230.

Also, the first electrolyte sheet 240_1 may be disposed on an upper portion of the outermost surface of the electrode assembly 200, and the second electrolyte sheet 240_2 may be disposed on a lower portion of the outermost surface of the electrode assembly 200. In this case, the first electrolyte sheet 240_1 and the second electrolyte sheet 240_2 may play a role in maintaining a shape of the electrode assembly 200 before the electrode assembly 200 is accommodated in the battery case 400. Since the first electrolyte sheet 240_1 may melt during the operation of the secondary battery 100, it may not pressurize the electrode assembly 200 when a swelling phenomenon occurs in which the electrode assembly 200 expands. The second electrolyte sheet 240_2 may melt during the formation process of the secondary battery 100 after the electrode assembly 200 is accommodated in the battery case 400.

Each of the first electrolyte sheet 240_1 and the second electrolyte sheet 240_2 according to the present invention may be disposed at different positions in the secondary battery 100. Specifically, the first electrolyte sheet 240_1 may be disposed on the surface of the separator 230, and the second electrolyte sheet 240_2 may be disposed on the outermost surface of the electrode assembly 200.

In this case, there may be two or more first electrolyte sheets 240_1, and a plurality of the first electrolyte sheets 240_1 may be arranged at predetermined intervals on the surface of the separator. Also, the plurality of the first electrolyte sheets 240_1 may be disposed on both surfaces of the separator. That is, since the first electrolyte sheet 240_1 is disposed on the surface of the separator 230, the first electrolyte sheet 240_1 may provide the electrolyte to the positive electrode plate 210 and the negative electrode plate 220 inside the electrode assembly 200 during the operation of the secondary battery 100. As a result, the secondary battery 100, in which lifetimes of the positive electrode plate 210 and the negative electrode plate 220 are improved, may be achieved.

Also, the second electrolyte sheet 240_2 may be disposed at the center based on a height of the electrode assembly 200. Furthermore, there may be a plurality of the second electrolyte sheets 240_2. For example, each of the plurality of the second electrolyte sheets 240_2 may be positioned close to each of both ends of the electrode assembly 200.

That is, the first electrolyte sheet 240_1 and the second electrolyte sheet 240_2 are means for replenishing or impregnating the electrolyte during the formation process or charge and discharge of the secondary battery, wherein they may stably maintain output performance of the secondary battery.

**Electrolyte**

The secondary battery 100 according to the present invention further includes an electrolyte (not shown) that is injected inside the battery case 400. The electrolyte is to move lithium ions which are generated by an electrochemical reaction of the electrode during charge/discharge of the secondary battery, wherein it may include a non-aqueous organic electrolyte that is a mixture of a lithium salt and organic solvents.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); or an alcohol-based solvent, such as ethyl alcohol and isopropyl alcohol, may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in a lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

**<Method of Preparing Secondary Battery>**

A method of preparing the secondary battery 100 according to the present invention includes the steps of: preparing the electrode assembly 200 by winding the positive electrode plate 210, the negative electrode plate 220, and the separator 230 disposed between the positive electrode plate 210 and the negative electrode plate 220 in one direction; accommodating the electrode assembly 200 in the battery case 400; adding the electrolyte solid 310 including a first polymer electrolyte inside the hollow center pin 300 disposed on a winding axis of the electrode assembly 200; and preparing a non-formed secondary battery by adding an electrolyte to the battery case 400 and sealing the battery case 400 with the sealing body 410. In this case, a melting point of the first polymer electrolyte is in a range of 60°C to 73°C.

The electrolyte solid 310 may further include a second polymer electrolyte, and a melting point of the second polymer electrolyte may be in a range of 35°C to 55°C.

**Step of Preparing the Electrode Assembly**

The step of preparing the electrode assembly 200 may include at least one selected from the steps of: preparing the first electrolyte sheet 240_1 including a first polymer electrolyte, and disposing the first electrolyte sheet 240_1 on at least one surface selected from a surface of the separator 230 and an outermost surface of the electrode assembly 200; and preparing the second electrolyte sheet 240_2 including a second polymer electrolyte, and disposing the second electrolyte sheet 240_2 on at least one surface selected from the surface of the separator 230 and the outermost surface of the electrode assembly 200. If the first electrolyte sheet 240_1 and the second electrolyte sheet include the first polymer electrolyte and the second polymer electrolyte, respectively, the first electrolyte sheet 240_1 or the second electrolyte sheet 240_2 may be prepared by using a conventional forming method.

**Step of Accommodating the Electrode Assembly in the Battery Case**

The step of accommodating the electrode assembly 200 in the battery case 400 may be inserting the electrode assembly 200 through the open end of the battery case 400. The electrode assembly 200 may be inserted and removed through the open end of the battery case 400.

**Step of Adding the Electrolyte Solid Including first polymer electrolyte Inside the Hollow Center Pin**

The step of adding the electrolyte solid including a first polymer electrolyte inside the hollow center pin may include a step of preparing the electrolyte solid 310, and, if the first polymer electrolyte is included as a component, the electrolyte solid 310 may be prepared by using a conventional forming method.

Also, the electrolyte solid may further include a second polymer electrolyte, and characteristics of the second polymer electrolyte are the same as those of the above-described second polymer electrolyte. Thus, the step of adding the electrolyte solid may include a step of preparing the electrolyte solid including the second polymer electrolyte.

**Step of Preparing Non-formed Secondary Battery**

The step of preparing a non-formed secondary battery may be adding an electrolyte to the battery case 400 and sealing the battery case 400 with the sealing body 410. The sealing body 410 may be coupled to the battery case 400. Deformation or damage of the electrode assembly 200 by an external environment may be prevented by sealing the battery case 400 with the sealing body 410.

**Step of Performing Formation on the Non-formed Secondary Battery**

The method of preparing the secondary battery 100 may further include a step of performing formation on the non-formed secondary battery. The performing of the formation may be charging and discharging the secondary battery 100 at 45°C to 59°C. In exemplary embodiments, temperature of the performing of the formation may be in a range of 50°C to 59°C.

Also, the performing of the formation may include a step in which the electrolyte solid 310 including the second polymer electrolyte melts in the battery case 400. Specifically, the second polymer electrolyte may melt and move into pores of the electrode assembly through the plurality of holes 320 of the center pin 300 during the performing of the formation. The pores of the electrode assembly 200 may include pores of the positive electrode plate 210, the negative electrode plate 220, and the separator 230. Accordingly, even though the electrode assembly 200 is enlarged, the electrolyte impregnability of the center of the electrode assembly 200 may be improved.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

**Example 1**

(1) Preparation of Electrolyte Solid Including First Polymer Electrolyte

Lithium bis(trifluoromethanesulfonyl)imide (99.9% purity LiTFSI) stored at 110°C for 24 hours or more in a dry room and polyethylene oxide (PEO) stored at 45°C for 48 hours were prepared. Thereafter, the polyethylene oxide:the LiTFSI were mixed at a weight ratio of 50:1 and stirred for 12 hours to prepare a first polymer electrolyte. A cylindrical electrolyte solid having a melting point of about 60°C and capable of being disposed inside a center pin was prepared by using the first polymer electrolyte.

(2) Preparation of Secondary Battery

A separator was disposed between a positive electrode plate and a negative electrode plate and wound to prepare a jelly-roll-type electrode assembly, the electrode assembly was accommodated in a battery case, and a hollow center pin was disposed on a winding axis of the electrode assembly. An electrolyte solid including the first polymer electrolyte was added into the hollow center pin, and an electrolyte, in which ethylene carbonate (EC) :ethyl methyl carbonate (EMC) were mixed in a volume ratio of 30:70 and $LiPF_6$ was then dissolved such that a concentration of the $LiPF_6$ was 1.0 M, was injected into the battery case. Thereafter, an open end of the battery case was sealed with a sealing body to prepare a non-formed secondary battery.

Thereafter, the non-formed secondary battery was subjected to a formation process at 45°C to 59°C, and then subjected to additional aging for 3 days to prepare a secondary battery.

**Example 2**

A secondary battery was prepared in the same manner as in Example 1 except that the first polymer electrolyte was prepared as follows.

Polyethylene oxide (PEO) and aluminum oxide ($Al_2O_3$) were mixed in a mass ratio of 9:1 with a lithium salt (LiTFSI) and stirred for 12 hours to prepare a first polymer electrolyte having a melting point of about 73°C.

**Example 3**

A secondary battery was prepared in the same manner as in Example 1 except that an electrolyte solid including a second polymer electrolyte was prepared as follows and additionally inserted into the center pin.

(1) Preparation of Electrolyte Solid Including Second Polymer Electrolyte

Polycarboxylate ether (PCE) and polyethylene oxide (PEO), which were dried for 24 hours in a dry room, were prepared. Thereafter, a mixture of the polycarboxylate ether (PCE) and the polyethylene oxide (PEO), in which the polycarboxylate ether (PCE) and the polyethylene oxide (PEO) were mixed in a mass ratio of 9:1, was added to a mixture of lithium bis(trifluoromethanesulfonyl)imide (99.9% purity LiTFSI) and succinonitrile (SN) such that an amount of the mixture of the polycarboxylate ether (PCE) and the polyethylene oxide (PEO) was 10 wt%, and stirring was then performed at 70°C to prepare a second polymer electrolyte. A cylindrical electrolyte solid having a melting point of 42°C and capable of being disposed inside a center pin was prepared by using the second polymer electrolyte.

### Example 4

A secondary battery was prepared in the same manner as in Example 3 except that the second polymer electrolyte was prepared as follows.

Polycarboxylate ether (PCE) and polyvinylpyrrolidine (PVP), which were dried for 24 hours in a dry room, were prepared. Thereafter, a mixture of the polycarboxylate ether (PCE) and the polyvinylpyrrolidine (PVP), in which the polycarboxylate ether (PCE) and the polyvinylpyrrolidine (PVP) were mixed in a mass ratio of 9:1, was added to a mixture of lithium bis(trifluoromethanesulfonyl)imide (99.9% purity LiTFSI) and succinonitrile (SN) such that an amount of the mixture of the polycarboxylate ether (PCE) and the polyvinylpyrrolidine (PVP) was 10 wt%, and stirring was then performed at 70°C to prepare a second polymer electrolyte having a melting point of about 52°C.

### Example 5

A secondary battery was prepared in the same manner as in Example 3 except that a first electrolyte sheet was prepared and disposed on an outermost surface of the electrode assembly, and a second electrolyte sheet was prepared and disposed on a surface of the separator.

The first electrolyte sheet was prepared in a form of a film by casting the electrolyte solid including the first polymer electrolyte into a glass container and drying it in a vacuum oven at 50°C for 24 hours.

The second electrolyte sheet was prepared in a form of a film by casting the electrolyte solid including the second polymer electrolyte into a glass container and drying it in a vacuum oven at 35°C for 24 hours.

### Comparative Example 1

A secondary battery was prepared in the same manner as in Example 1 except that an electrolyte solid was not used.

### Experimental Example 1: Impregnability Evaluation

Charging and discharging of each of the secondary batteries prepared in Examples 1 to 5 and Comparative Example 1 at a 1C-rate were set as one cycle, and each secondary battery was disassembled after 100 cycles to relatively evaluate electrolyte impregnability and the results thereof are presented in Table 1 below.

In Table 1 below, the mark "○" indicates good, wherein it means that an electrolyte-impregnated portion relative to a total surface of the electrode and the separator was 80% or more. The mark "Δ" indicates average, wherein it means that the electrolyte-impregnated portion relative to the total surface of the electrode and the separator was in a range of 50% to 80%.

### Experimental Example 2: Evaluation of Decrease in Electrolyte During Use of the Secondary Battery

Charging and discharging of each of the secondary batteries prepared in Examples 1 to 5 and Comparative Example 1 at a 1C-rate were set as one cycle, and each secondary battery was disassembled after 100 cycles to open the battery case. Thereafter, an amount of the residual electrolyte may be confirmed by comparing weights of the secondary battery before and after 100 cycles. The amount of the residual electrolyte was evaluated to evaluate performance for decrease in the electrolyte, and the results thereof are presented in Table 1 below.

In Table 1 below, the mark "o" indicates that the performance was 90% or more based on the result of the residual electrolyte of the pouch-type secondary battery prepared in Example 1, and the mark "X" indicates that the performance was less than 80% based on the result of Example 1.

[Table 1]

|  | Example 1 | Example 2 | Example 3 | Example 4 | Example 5 | Comparative Example 1 |
|---|---|---|---|---|---|---|
| Impregnabil ity evaluation | ○ | ○ | ○ | ○ | ○ | Δ |
| Residual electrolyte evaluation | ○ | ○ | ○ | ○ | ○ | X |

Referring to Table 1, it may be confirmed that the secondary batteries of Examples 1 to 5 had better electrolyte impregnability and a larger amount of the residual electrolyte than the secondary battery of Comparative Example 1. The reason for this is considered that the electrolyte solid, which may replenish the electrolyte or impregnate the electrode assembly during the formation process or charge and discharge of the secondary battery, was used.

[Description of the Symbols]

100: Secondary Battery
200: Electrode Assembly
210: Positive Electrode Plate
220: Negative Electrode Plate
230: Separator
240_1: First Electrolyte Sheet
240_2: Second Electrolyte Sheet
300: Center Pin
310: Electrolyte Solid
320: Plurality of Holes
400: Battery Case
410: Sealing Body

**Claims**

1.  A secondary battery comprising:

    an electrode assembly in which a positive electrode plate, a negative electrode plate, and a separator disposed between the positive electrode plate and the negative electrode plate are wound in one direction and impregnated with an electrolyte;
    a hollow center pin disposed on a winding axis of the electrode assembly and having a plurality of holes formed on an outer circumferential surface thereof;
    an electrolyte solid disposed inside a hollow of the center pin and including a first polymer electrolyte having a melting point of 60°C to 73°C;
    a battery case accommodating the electrode assembly and the center pin; and
    a sealing body sealing an open end of the battery case.

2.  The secondary battery of claim 1, wherein the first polymer electrolyte comprises a main component including polyethylene oxide; and a minor component including at least one selected from the group consisting of lithium bis(trifluoromethanesulfonyl)imide and aluminum oxide.

3.  The secondary battery of claim 1, wherein a diameter ($D_c$) of the center pin and a diameter ($D_h$) of each of the plurality of holes satisfy Equation 1:

$$[\text{Equation 1}]$$

$$D_c/10 \leq D_h \leq D_c/3.$$

4.  The secondary battery of claim 1, wherein the plurality of holes are arranged at predetermined intervals along a circumferential direction.

5.  The secondary battery of claim 1, wherein the plurality of holes are arranged at predetermined intervals along a direction perpendicular to a circumferential direction.

6.  The secondary battery of claim 1, wherein the electrolyte solid further comprises a second polymer electrolyte, wherein a melting point of the second polymer electrolyte is lower than the melting point of the first polymer electrolyte.

7. The secondary battery of claim 6, wherein the melting point of the second polymer electrolyte is in a range of 35°C to 55°C.

8. The secondary battery of claim 6, wherein the second polymer electrolyte comprises a main component including succinonitrile; and a minor component including at least one selected from the group consisting of polycarboxylate ether, polyethylene oxide, polyvinylpyrrolidone, polyethylene carbonate, and polyacrylonitrile.

9. The secondary battery of claim 1, further comprising a first electrolyte sheet including the first polymer electrolyte, wherein the first electrolyte sheet is disposed on at least one surface selected from a surface of the separator and an outermost surface of the electrode assembly.

10. The secondary battery of claim 9, further comprising a second electrolyte sheet including the second polymer electrolyte,

wherein the second electrolyte sheet is disposed on at least one surface selected from the surface of the separator and the outermost surface of the electrode assembly, and
a melting point of the second polymer electrolyte is lower than the melting point of the first polymer electrolyte.

11. The secondary battery of claim 1, wherein the secondary battery is a cylindrical type secondary battery.

12. A method of preparing a secondary battery, the method comprising the steps of:

preparing an electrode assembly by winding a positive electrode plate, a negative electrode plate, and a separator disposed between the positive electrode plate and the negative electrode plate in one direction;
accommodating the electrode assembly in a battery case;
adding an electrolyte solid including a first polymer electrolyte inside a hollow center pin disposed on a winding axis of the electrode assembly; and
preparing a non-formed secondary battery by adding an electrolyte to the battery case and sealing the battery case with a sealing body,
wherein a melting point of the first polymer electrolyte is in a range of 60°C to 73°C.

13. The method of preparing a secondary battery of claim 12, wherein the electrolyte solid further comprises a second polymer electrolyte,
wherein a melting point of the second polymer electrolyte is in a range of 35°C to 55°C.

14. The method of preparing a secondary battery of claim 13, further comprising a step of performing formation on the non-formed secondary battery,

wherein the center pin comprises a plurality of holes, and
the second polymer electrolyte melts and moves into pores of the electrode assembly through the plurality of holes during the performing of the formation on the non-formed secondary battery.

15. The method of preparing a secondary battery of claim 13, wherein the preparing of the electrode assembly comprises at least one selected from the steps of:

preparing a first electrolyte sheet including the first polymer electrolyte, and disposing the first electrolyte sheet on at least one surface selected from a surface of the separator and an outermost surface of the electrode assembly; and
preparing a second electrolyte sheet including the second polymer electrolyte, and disposing the second electrolyte sheet on at least one surface selected from the surface of the separator and the outermost surface of the electrode assembly.

[FIG. 1]

100

[FIG. 2]

100

[FIG. 3a]

300

$D_c$   310

320

$D_h$

[FIG. 3b]

[FIG. 3c]

[FIG. 4]

[FIG. 5]

# INTERNATIONAL SEARCH REPORT

| International application No. |
| --- |
| **PCT/KR2024/019886** |

| A. | CLASSIFICATION OF SUBJECT MATTER |
| --- | --- |
| | **H01M 10/42**(2006.01)i; **H01M 10/44**(2006.01)i; **H01M 10/0565**(2010.01)i; **H01M 10/04**(2006.01)i; **H01M 10/052**(2010.01)i |

According to International Patent Classification (IPC) or to both national classification and IPC

| B. | FIELDS SEARCHED |
| --- | --- |

Minimum documentation searched (classification system followed by classification symbols)

H01M 10/42(2006.01); H01M 10/054(2010.01); H01M 10/0562(2010.01); H01M 10/38(2006.01); H01M 2/10(2006.01); H01M 2/16(2006.01); H01M 4/38(2006.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체(electrode assembly), 홀(hole), 센터 핀(center pin), 고분자 전해질 (polymer electrolyte), 고형체(solid)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-0696784 B1 (SAMSUNG SDI CO., LTD.) 19 March 2007 (2007-03-19)<br>See paragraphs [0028]-[0055] and figures 1a-4d. | 1-15 |
| A | KR 10-2018-0095681 A (JOHNSON IP HOLDING, LLC) 27 August 2018 (2018-08-27)<br>See paragraph [0032]. | 1-15 |
| A | KR 10-1106397 B1 (SAMSUNG SDI CO., LTD.) 17 January 2012 (2012-01-17)<br>See paragraphs [0017]-[0054] and figures 1a-4. | 1-15 |
| A | US 2023-0126762 A1 (SILA NANOTECHNOLOGIES, INC.) 27 April 2023 (2023-04-27)<br>See paragraphs [0032]-[0130] and figures 1-10C. | 1-15 |
| A | JP 2015-534243 A (MICROSOFT CORPORATION) 26 November 2015 (2015-11-26)<br>See paragraphs [0017]-[0046] and figures 1-7. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 March 2025** | **12 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/019886**

| Patent document cited in search report | | | Publication date (day/month/year) | Patent family member(s) | | | Publication date (day/month/year) |
|---|---|---|---|---|---|---|---|
| KR | 10-0696784 | B1 | 19 March 2007 | KR | 10-2006-0111841 | A | 30 October 2006 |
| KR | 10-2018-0095681 | A | 27 August 2018 | CN | 108604665 | A | 28 September 2018 |
| | | | | CN | 108604665 | B | 22 April 2022 |
| | | | | CN | 114551990 | A | 27 May 2022 |
| | | | | EP | 3394918 | A1 | 31 October 2018 |
| | | | | JP | 2019-500739 | A | 10 January 2019 |
| | | | | JP | 2020-002009 | A | 09 January 2020 |
| | | | | JP | 2020-177917 | A | 29 October 2020 |
| | | | | JP | 6763965 | B2 | 30 September 2020 |
| | | | | JP | 7038761 | B2 | 18 March 2022 |
| | | | | JP | 7220642 | B2 | 10 February 2023 |
| | | | | US | 10566611 | B2 | 18 February 2020 |
| | | | | US | 11417873 | B2 | 16 August 2022 |
| | | | | US | 2017-0179472 | A1 | 22 June 2017 |
| | | | | US | 2020-0036000 | A1 | 30 January 2020 |
| | | | | WO | 2017-0112804 | A1 | 29 June 2017 |
| KR | 10-1106397 | B1 | 17 January 2012 | KR | 10-2011-0024390 | A | 09 March 2011 |
| | | | | US | 2011-0052973 | A1 | 03 March 2011 |
| | | | | US | 8241781 | B2 | 14 August 2012 |
| US | 2023-0126762 | A1 | 27 April 2023 | CN | 108370060 | A | 03 August 2018 |
| | | | | CN | 108370060 | B | 30 June 2023 |
| | | | | US | 10522873 | B2 | 31 December 2019 |
| | | | | US | 11545694 | B2 | 03 January 2023 |
| | | | | US | 2017-0170515 | A1 | 15 June 2017 |
| | | | | US | 2020-0127327 | A1 | 23 April 2020 |
| | | | | WO | 2017-106563 | A1 | 22 June 2017 |
| JP | 2015-534243 | A | 26 November 2015 | CN | 104704653 | A | 10 June 2015 |
| | | | | CN | 104718641 | A | 17 June 2015 |
| | | | | CN | 104718641 | B | 31 July 2020 |
| | | | | DK | 2965369 | T3 | 13 March 2017 |
| | | | | EP | 2907179 | A1 | 19 August 2015 |
| | | | | EP | 2907179 | B1 | 06 December 2017 |
| | | | | EP | 2965369 | A2 | 13 January 2016 |
| | | | | EP | 2965369 | B1 | 07 December 2016 |
| | | | | EP | 3168914 | A1 | 17 May 2017 |
| | | | | EP | 3168914 | B1 | 27 February 2019 |
| | | | | EP | 3174153 | A1 | 31 May 2017 |
| | | | | HK | 1220041 | A1 | 21 April 2017 |
| | | | | JP | 2015-534242 | A | 26 November 2015 |
| | | | | JP | 6407870 | B2 | 17 October 2018 |
| | | | | KR | 10-2015-0067237 | A | 17 June 2015 |
| | | | | KR | 10-2015-0067238 | A | 17 June 2015 |
| | | | | US | 10084168 | B2 | 25 September 2018 |
| | | | | US | 2014-0099538 | A1 | 10 April 2014 |
| | | | | US | 2014-0099556 | A1 | 10 April 2014 |
| | | | | US | 2018-0366707 | A1 | 20 December 2018 |
| | | | | US | 2020-0335756 | A1 | 22 October 2020 |
| | | | | US | 9793525 | B2 | 17 October 2017 |
| | | | | WO | 2014-058683 | A1 | 17 April 2014 |
| | | | | WO | 2014-058684 | A2 | 17 April 2014 |

Form PCT/ISA/210 (patent family annex) (July 2022)

International application No.

**PCT/KR2024/019886**

| Patent document cited in search report | Publication date (day/month/year) | Patent family member(s) | Publication date (day/month/year) |
|---|---|---|---|
| | | WO 2014-058684 A3 | 19 June 2014 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230176098
- KR 1020240172904